# EUROPÄISCHE PATENTSCHRIFT

(11) **EP 3 969 297 B1**
(45) Veröffentlichungstag und Bekanntmachung des Hinweises auf die Patenterteilung: **08.05.2024**
(21) Anmeldenummer: 20711897.7
(22) Anmeldetag: 16.03.2020
(51) Int. Cl.: B60C 19/00

(54) **REIFEN**
TYRE
PNEU

(30) Priorität: 15.05.2019 DE 102019207020
(43) Veröffentlichungstag der Anmeldung: 23.03.2022
(73) Patentinhaber: Continental Reifen Deutschland GmbH, 30175 Hannover (DE)
(72) Erfinder: EHMKE, Tobias, 30419 Hannover (DE); KURZ, Martin, 30419 Hannover (DE)
(74) Vertreter: Continental Corporation
(86) Internationale Anmeldenummer: PCT/EP2020/057026
(87) Internationale Veröffentlichungsnummer: WO 2020/229023

(56) Entgegenhaltungen:
- EP-A1- 3 196 056
- EP-A1- 3 632 711
- DE-A1-102017 209 550
- FR-A1- 3 059 603
- FR-A1- 3 059 605
- US-A1- 2006 174 985

## Beschreibung

Die Erfindung bezieht sich auf einen Reifen.

Die Erfindung geht aus von einem Reifen. Der Reifen ist um eine Rotationsachse in eine Umlaufrichtung rotierbar und der Reifen weist einen Wulstbereich auf, wobei der Wulstbereich einen Wulstkern aufweist. Der Reifen weist eine elektromagnetische Sende- und Empfangsvorrichtung auf und der Reifen weist eine Karkasslage auf. Die Karkasslage weist außerdem ein Karkasslagenumschlagsende auf.

Bei der elektromagnetischen Sende- und Empfangsvorrichtung handelt es sich insbesondere um eine RFID-Vorrichtung. RFID steht für Radio Frequency Identification und bedeutet Identifizierung mit Hilfe elektromagnetischer Wellen.

Aus dem Stand der Technik sind elektromagnetische Sende- und Empfangsvorrichtungen für Reifen bekannt. Beispielsweise wird in der EP2223814B1 eine elektromagnetische Sende- und Empfangsvorrichtung für einen Reifen offenbart. Weiter ist der Einsatz von elektromagnetischen Sende- und Empfangsvorrichtungen aus der EP 362711A1, der FR3059603A1, der FR3059605A1, der EP3196056A1, der DE102017209550A1 und der US2006/174985A1 bekannt.

Bei den aus dem Stand der Technik bekannten Reifen könnte ein Einsatz einer elektromagnetischen Sende- und Empfangsvorrichtung nicht optimal ausgestaltet sein. So könnte beispielsweise das elektromagnetische Sende- und Empfangsvermögen der elektromagnetischen Sende- und Empfangsvorrichtung durch den Wulstkern beeinträchtigt werden.

Der Erfindung liegt daher die Aufgabe zugrunde einen Reifen bereitzustellen, bei dem das elektromagnetische Sende- und Empfangsvermögen der elektromagnetischen Sende- und Empfangsvorrichtung verbessert wird.

Gelöst wird die erfindungsgemäße Aufgabe dadurch, dass ein radialer Abstand eines ersten Oberflächenpunktes der elektromagnetischen Sende- und Empfangsvorrichtung, der zur Rotationsachse in radialer Richtung nächstgelegen ist, zu der Rotationsachse mindestens 3 mm größer ist als ein radialer Abstand zur Rotationsachse eines Oberflächenpunktes des Wulstkerns, der zur Rotationsachse in radialer Richtung am weitesten entfernt liegt, und, dass ein radialer Abstand eines zweiten Oberflächenpunktes der elektromagnetischen Sende- und Empfangsvorrichtung, der zur Rotationsachse in radialer Richtung am weitesten entfernt liegt, zur Rotationsachse höchstens 10 mm größer ist, als ein radialer Abstand des Karkasslagenumschlagsendes zur Rotationsachse.

Der Reifen folgt grundsätzlich einer Form eines Kreises. Ein radialer Abstand oder eine radiale Richtung erstrecken sich parallel zu einem Radius des Kreises dessen Form der Reifen grundsätzlich folgt. Der Radius liegt rechtwinklig zur Rotationsachse und zur Umlaufrichtung. Ein radialer Abstand ist stets ein Abstand bis zur Rotationsachse.

Durch den erfindungsgemäßen Umstand, wonach ein radialer Abstand eines ersten Oberflächenpunktes der elektromagnetischen Sende- und Empfangsvorrichtung, der zur Rotationsachse in radialer Richtung nächstgelegen ist, zu der Rotationsachse mindestens 3 mm größer ist als ein radialer Abstand zur Rotationsachse eines Oberflächenpunktes des Wulstkerns, der zur Rotationsachse in radialer Richtung am weitesten entfernt liegt, und, dass ein radialer Abstand eines zweiten Oberflächenpunktes der elektromagnetischen Sende- und Empfangsvorrichtung, der zur Rotationsachse in radialer Richtung am weitesten entfernt liegt, zur Rotationsachse höchstens 10 mm größer ist, als ein radialer Abstand des Karkasslagenumschlagsendes zur Rotationsachse, wird insbesondere ein solcher räumlicher Abstand zum Wulstkern durch die elektromagnetische Sende- und Empfangsvorrichtung eingehalten, dass das elektromagnetische Sende- und Empfangsvermögen der elektromagnetischen Sende- und Empfangsvorrichtung weniger beeinträchtigt wird, als es bei solchen Anordnungen der Fall sein könnte, bei denen die elektromagnetische Sende- und Empfangsvorrichtung räumlich näher zu dem Wulstkern liegt. Darüber hinaus liegt die elektromagnetische Sende- und Empfangsvorrichtung somit in einem Bereich des Reifens der während eines Reifenbetriebs weniger mechanische Einwirkung erfährt, als andere Bereiche des Reifens, dadurch erfährt auch die elektromagnetische Sende- und Empfangsvorrichtung weniger mechanische Einwirkung als wenn sie in einem anderen Bereich des Reifens angeordnet wäre. Je weniger mechanische Einwirkung die elektromagnetische Sende- und Empfangsvorrichtung erfährt, desto geringer ist die Möglichkeit einer Beschädigung der elektromagnetischen Sende- und Empfangsvorrichtung.

Somit wird ein verbesserter Reifen bereitgestellt.

Insbesondere ist ein radialer Abstand eines ersten Oberflächenpunktes der elektromagnetischen Sende- und Empfangsvorrichtung, der zur Rotationsachse in radialer Richtung nächstgelegen ist, zu der Rotationsachse mindestens 0,1 mm bis mindestens 3 mm größer als ein radialer Abstand zur Rotationsachse eines Oberflächenpunktes des Wulstkerns, der zur Rotationsachse in radialer Richtung am weitesten entfernt liegt, und ein radialer Abstand eines zweiten Oberflächenpunktes der elektromagnetischen Sende- und Empfangsvorrichtung, der zur Rotationsachse in radialer Richtung am weitesten entfernt liegt, zur Rotationsachse ist höchstens 0,1 mm bis höchstens 10 mm größer, als ein radialer Abstand des Karkasslagenumschlagsendes zur Rotationsachse.

Bei dem Reifen handelt es sich insbesondere um einen Lkw-Reifen, um einen Pkw-Reifen oder um einen Fahrrad-Reifen oder um einen Motorrad-Reifen.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung ist der radiale Abstand des ersten Oberflächenpunktes der elektromagnetischen Sende- und Empfangsvorrichtung, der zur Rotationsachse in radialer Richtung nächstgelegen ist, zu der Rotationsachse mindestens 5 mm größer, als der radiale Abstand zur Rotationsachse des Oberflächenpunktes des Wulstkerns, der zur Rotationsachse in radialer Richtung am weitesten entfernt liegt.

Durch den erfindungsgemäßen Umstand, wonach der radiale Abstand des ersten Oberflächenpunktes der elektromagnetischen Sende- und Empfangsvorrichtung, der zur Rotationsachse in radialer Richtung nächstgelegen ist, zu der Rotationsachse mindestens 5 mm größer ist als der radiale Abstand zur Rotationsachse des Oberflächenpunktes des Wulstkerns, der zur Rotationsachse in radialer Richtung am weitesten entfernt liegt, werden Abschirmeffekte oder Verstimmungseffekte der elektromagnetischen Sende- und Empfangsvorrichtung durch den Wulstkern weitestgehend vermieden. Bei den Verstimmungseffekten handelt es sich um solche Effekte, die eine Auswirkung auf das elektromagnetische Sende- und Empfangsvermögen der elektromagnetischen Sende- und Empfangsvorrichtung haben können.

Gemäß einer nächsten vorzugsweisen Ausgestaltungsform der vorliegenden Erfindung ist der radiale Abstand des ersten Oberflächenpunktes der elektromagnetischen Sende- und Empfangsvorrichtung, der zur Rotationsachse in radialer Richtung nächstgelegen ist, zu der Rotationsachse 5 mm größer, als der radiale Abstand zur Rotationsachse des Oberflächenpunktes des Wulstkerns, der zur Rotationsachse in radialer Richtung am weitesten entfernt liegt.

Durch den erfindungsgemäßen Umstand, wonach der radiale Abstand des ersten Oberflächenpunktes der elektromagnetischen Sende- und Empfangsvorrichtung, der zur Rotationsachse in radialer Richtung nächstgelegen ist, zu der Rotationsachse 5 mm größer ist als der radiale Abstand zur Rotationsachse des Oberflächenpunktes des Wulstkerns, der zur Rotationsachse in radialer Richtung am weitesten entfernt liegt, werden Abschirmeffekte oder Verstimmungseffekte der elektromagnetischen Sende- und Empfangsvorrichtung durch den Wulstkern weitestgehend vermieden.

Gemäß einer nächsten vorzugsweisen Ausgestaltungsform der vorliegenden Erfindung handelt es sich bei dem Karkasslagenumschlagsende um einen Karkasslagenumschlagsendpunkt. Dabei handelt es sich bei dem Karkasslagenumschlagsendpunkt um denjenigen Oberflächenpunkt des Karkasslagenumschlagsendes, der in radialer Richtung am weitesten von der Rotationsachse entfernt liegt.

Gemäß einer nächsten vorzugsweisen Ausgestaltungsform der vorliegenden Erfindung ist die elektromagnetische Sende- und Empfangsvorrichtung zwischen einer Reifeninnenschicht des Reifens und der Karkasslage angeordnet.

Durch den erfindungsgemäßen Umstand, wonach die elektromagnetische Sende- und Empfangsvorrichtung zwischen einer Reifeninnenschicht des Reifens und der Karkasslage angeordnet ist, wird die elektromagnetische Sende- und Empfangsvorrichtung in einem solchen Bereich des Reifens angeordnet, in dem während des Reifenbetriebs geringere mechanische Effekte auf die die elektromagnetische Sende- und Empfangsvorrichtung einwirken als in anderen Bereichen des Reifens.

Die elektromagnetische Sende- und Empfangsvorrichtung weist gemäß einer vorteilhaften Ausführungsform der Erfindung insbesondere eine Gummiummantelung auf, wobei die Gummiummantelung insbesondere Bestandteil der elektromagnetische Sende- und Empfangsvorrichtung ist. Innerhalb der Gummiummantelung sind elektronische und elektrische Komponenten der elektromagnetischen Sende- und Empfangsvorrichtung angeordnet. Die Gummiummantelung ist dann Bestandteil der elektromagnetischen Sende- und Empfangsvorrichtung. Die Oberflächenpunkte, also insbesondere der erste Oberflächenpunkt und der zweite Oberflächenpunkt, der elektromagnetischen Sende- und Empfangsvorrichtung liegen dann auf der Oberfläche der Gummiummantelung. Die Oberfläche der Gummiummantelung ist eine von der elektromagnetischen Sende- und Empfangsvorrichtung weg orientierte Außenfläche. Die Gummiummantelung ist insbesondere quaderförmig oder ellipsoid ausgebildet, wobei insbesondere eine maximale Dicke der elektromagnetischen Sende- und Empfangsvorrichtung höchstens 3 mm, eine dazu rechtwinklig sich erstreckende maximale Länge der elektromagnetischen Sende- und Empfangsvorrichtung von höchstens 80 mm und eine sich zu Dicke und Länge rechtwinklig sich erstreckende maximale Breite der elektromagnetischen Sende- und Empfangsvorrichtung von höchstens 20 mm nicht überschritten wird. Die elektronischen und elektrischen Komponenten der elektromagnetischen Sende- und Empfangsvorrichtung weisen insbesondere zusammen eine maximale räumliche Erstreckung von höchstens 70 mm auf. Die Antenne oder die Antennen der elektromagnetischen Sende- und Empfangsvorrichtung weist beziehungsweise weisen insbesondere für den Fall, wonach die Antenne beziehungsweise die Antennen einer Helixform folgt beziehungsweise folgen, einen Außendurchmesser von höchstens 2 mm auf.

Die elektromagnetische Sende- und Empfangsvorrichtung weist gemäß einer vorteilhaften Ausführungsform der Erfindung insbesondere eine Gummiummantelung auf, wobei die Gummiummantelung ein Elastizitätsmodul aufweist, das kleiner oder gleich einem Elastizitätsmodul einer angrenzenden Kautschukmischung ist. Bei der Kautschukmischung handelt es sich um eine an die Gummiummantelung angrenzende Kautschukmischung des Reifens, beispielsweise eine Reifeninnenschichtkautschukmischung oder eine Kautschukmischung, die die Karkasslage umgibt.

Die elektromagnetische Sende- und Empfangsvorrichtung weist gemäß einer vorteilhaften Ausführungsform der Erfindung insbesondere eine oder zwei Antennen auf. Die Antenne beziehungsweise die zwei Antennen sind insbesondere helixförmig.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines erfindungsgemäßen Reifens in Radialschnittansicht;
Fig. 2: Eine schematische Darstellung eines erfindungsgemäßen Reifens gemäß einer weiteren Ausführungsform in Radialschnittansicht;
Fig. 3: Eine schematische Darstellung eines erfindungsgemäßen Reifens gemäß einer weiteren Ausführungsform in Radialschnittansicht.

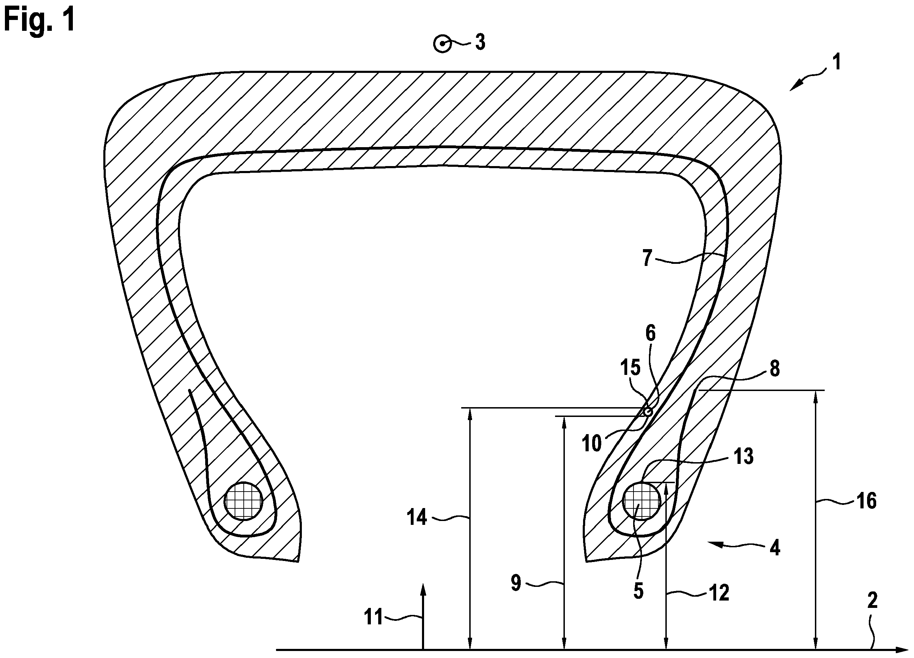

In der Figur 1 ist ein erfindungsgemäßer Reifen 1 schematisch in Radialschnittansicht dargestellt. Der Reifen 1 ist um eine Rotationsachse 2 in eine Umlaufrichtung 3 rotierbar.

Der Reifen 1 weist einen Wulstbereich 4 auf, wobei der Wulstbereich 4 einen Wulstkern 5 aufweist. Der Reifen 1 weist weiter eine elektromagnetische Sende- und Empfangsvorrichtung 6 auf.

Der Reifen weist ferner eine Karkasslage 7 auf, wobei die Karkasslage 7 ein Karkasslagenumschlagsende 8 aufweist.

Ein radialer Abstand 9 eines ersten Oberflächenpunktes 10 der elektromagnetischen Sende- und Empfangsvorrichtung 6, der zur Rotationsachse 2 in radialer Richtung 11 nächstgelegen ist, zu der Rotationsachse 2 ist mindestens 3 mm größer, als ein radialer Abstand 12 zur Rotationsachse 2 eines Oberflächenpunktes 13 des Wulstkerns 5, der zur Rotationsachse 2 in radialer Richtung 11 am weitesten entfernt liegt.

Dazu ist ein radialer Abstand 14 eines zweiten Oberflächenpunktes 15 der elektromagnetischen Sende- und Empfangsvorrichtung 6, der zur Rotationsachse 2 in radialer Richtung 11 am weitesten entfernt liegt, zur Rotationsachse 2 höchstens 10 mm größer, als ein radialer Abstand 16 des Karkasslagenumschlagsendes 8 zur Rotationsachse 2.

Der erste Oberflächenpunkt 10 weist zu der Rotationsachse 2 hin. Der zweite Oberflächenpunkt 15 weist von der Rotationsachse 2 weg. Der Oberflächenpunkt 13 weist von der Rotationsachse 2 weg.

Bei dem Karkasslagenumschlagsende 8 handelt es sich insbesondere um einen Karkasslagenumschlagsendpunkt 8, wobei es sich bei dem Karkasslagenumschlagsendpunkt 8 um denjenigen Oberflächenpunkt des Karkasslagenumschlagsendes 8 handelt, der in radialer Richtung 11 am weitesten von der Rotationsachse 2 entfernt liegt.

Der Karkasslagenumschlagsendpunkt 8 weist von der Rotationsachse 2 weg.

Gemäß der Darstellung in der Figur 1 ist der Betrag des radialen Abstands 9 kleiner als der Betrag des radialen Abstands 16.

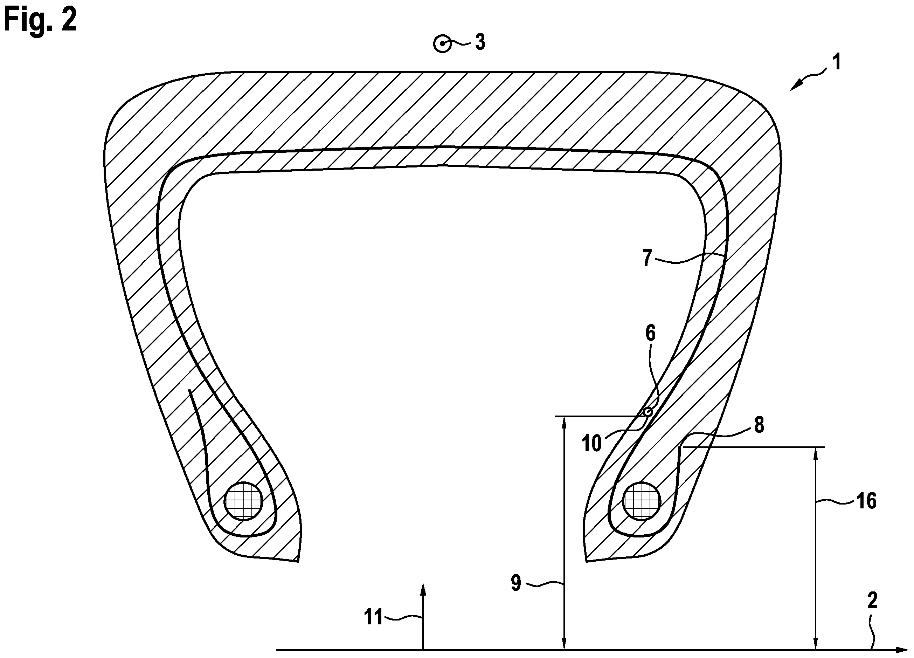

In der Figur 2 ist ein erfindungsgemäßer Reifen 1 schematisch in Radialschnittansicht gemäß einer Ausführungsform dargestellt. Gemäß der Darstellung in der Figur 2 ist der Betrag des radialen Abstands 9 größer als der Betrag des radialen Abstands 16.

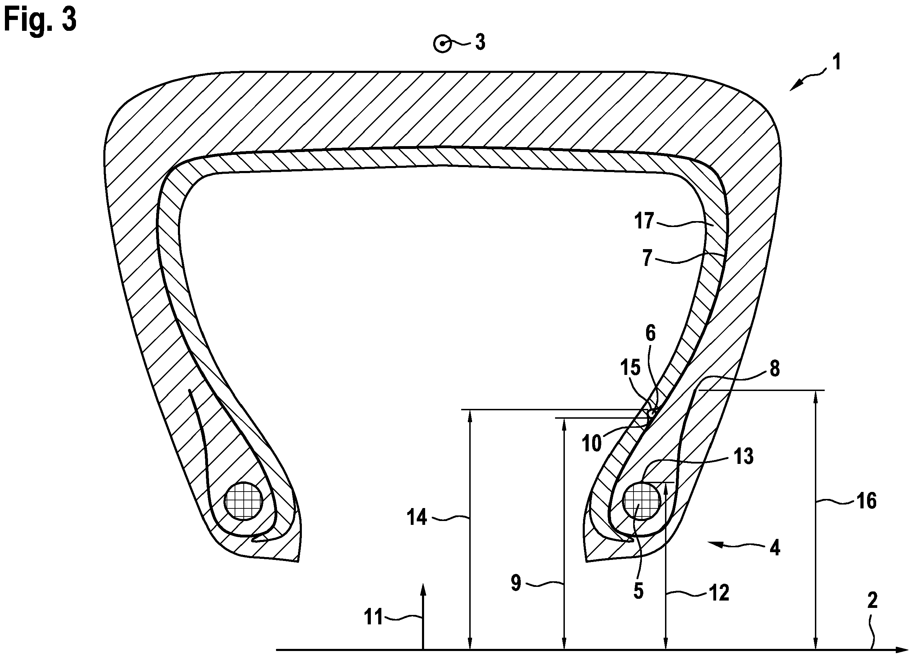

In der Figur 3 ist ein erfindungsgemäßer Reifen 1 schematisch in Radialschnittansicht gemäß einer weiteren Ausführungsform dargestellt. Gemäß der Darstellung in der Figur 3 ist die elektromagnetische Sende- und Empfangsvorrichtung 6 zwischen einer Reifeninnenschicht 17 des Reifens 1 und der Karkasslage 7 angeordnet.

### Bezugszeichenliste

### (ist Teil der Beschreibung)

- 1: Reifen
- 2: Rotationsachse
- 3: Umlaufrichtung
- 4: Wulstbereich
- 5: Wulstkern
- 6: Elektromagnetische Sende- und Empfangsvorrichtung
- 7: Karkasslage
- 8: Karkasslagenumschlagsende
- 9: Radialer Abstand eines ersten Oberflächenpunktes der elektromagnetischen Sendeund Empfangsvorrichtung
- 10: Erster Oberflächenpunkt der elektromagnetischen Sende- und Empfangsvorrichtung
- 11: Radiale Richtung
- 12: Radialer Abstand eines Oberflächenpunktes des Wulstkerns
- 13: Oberflächenpunkt des Wulstkerns
- 14: Radialer Abstand eines zweiten Oberflächenpunktes der elektromagnetischen Sende- und Empfangsvorrichtung
- 15: Zweiter Oberflächenpunkt der elektromagnetischen Sende- und Empfangsvorrichtung
- 16: Radialer Abstand des Karkasslagenumschlagsendes
- 17: Reifeninnenschicht

## Patentansprüche

1. Reifen (1), wobei der Reifen (1) um eine Rotationsachse (2) in einer Umlaufrichtung (3) rotierbar ist, aufweisend einen Wulstbereich (4), wobei der Wulstbereich (4) einen Wulstkern (5) aufweist, und aufweisend eine elektromagnetische Sende- und Empfangsvorrichtung (6) und aufweisend eine Karkasslage (7), wobei die Karkasslage (7) ein Karkasslagenumschlagsende (8) aufweist, wobei ein radialer Abstand (9) eines ersten Oberflächenpunktes (10) der elektromagnetischen Sende- und Empfangsvorrichtung (6), der zur Rotationsachse (2) in radialer Richtung (11) nächstgelegen ist, zu der Rotationsachse (2) mindestens 3 mm größer ist als ein radialer Abstand (12) zur Rotationsachse (2) eines Oberflächenpunktes (13) des Wulstkerns (5), der zur Rotationsachse (2) in radialer Richtung (11) am weitesten entfernt liegt, und, dass ein radialer Abstand (14) eines zweiten Oberflächenpunktes (15) der elektromagnetischen Sende- und Empfangsvorrichtung (6), der zur Rotationsachse (2) in radialer Richtung (11) am weitesten entfernt liegt, zur Rotationsachse (2) höchstens 10 mm größer ist, als ein radialer Abstand (16) des Karkasslagenumschlagsendes (8) zur Rotationsachse (2), wobei die elektromagnetische Sende- und Empfangsvorrichtung (6) eine Gummiummantelung aufweist, wobei die Gummiummantelung Bestandteil der elektromagnetischen Sende- und Empfangsvorrichtung (6) ist, wobei die Gummiummantelung ein Elastizitätsmodul aufweist, das kleiner oder gleich einem Elastizitätsmodul einer angrenzenden Kautschukmischung ist, wobei es sich bei der Kautschukmischung um eine an die Gummiummantelung angrenzende Kautschukmischung des Reifens (1) handelt, wobei die Gummiummantelung insbesondere quaderförmig oder ellipsoid ausgebildet ist, **dadurch gekennzeichnet, dass** eine maximale Dicke der elektromagnetischen Sende- und Empfangsvorrichtung (6) von höchstens 3 mm, eine dazu rechtwinklig sich erstreckende maximale Länge der elektromagnetischen Sende- und Empfangsvorrichtung (6) von höchstens 80 mm und eine sich zu Dicke und Länge rechtwinklig sich erstreckende maximale Breite der elektromagnetischen Sende- und Empfangsvorrichtung (6) von höchstens 20 mm nicht überschritten wird.

2. Reifen (1) nach dem vorhergehenden Anspruch, **dadurch gekennzeichnet, dass** der radiale Abstand (9) des ersten Oberflächenpunktes (10) der elektromagnetischen Sende- und Empfangsvorrichtung (6), der zur Rotationsachse (2) in radialer Richtung (11) nächstgelegen ist, zu der Rotationsachse (2) mindestens 5 mm größer ist als der radiale Abstand (12) zur Rotationsachse (2) des Oberflächenpunktes (13) des Wulstkerns (5), der zur Rotationsachse (2) in radialer Richtung (11) am weitesten entfernt liegt.

3. Reifen (1) nach dem vorhergehenden Anspruch, **dadurch gekennzeichnet, dass** der radiale Abstand (9) des ersten Oberflächenpunktes (10) der elektromagnetischen Sende- und Empfangsvorrichtung (6), der zur Rotationsachse (2) in radialer Richtung (11) nächstgelegen ist, zu der Rotationsachse (2) 5 mm größer ist als der radiale Abstand (12) zur Rotationsachse (2) des Oberflächenpunktes (13) des Wulstkerns (5), der zur Rotationsachse (2) in radialer Richtung (11) am weitesten entfernt liegt.

4. Reifen (1) nach einem der vorhergehenden Ansprüche, **dadurch gekennzeichnet, dass** es sich bei dem Karkasslagenumschlagsende (8) um einen Karkasslagenumschlagsendpunkt (8) handelt, wobei es sich bei dem Karkasslagenumschlagsendpunkt (8) um denjenigen Oberflächenpunkt des Karkasslagenumschlagsendes (8) handelt, der in radialer Richtung (11) am weitesten von der Rotationsachse (2) entfernt liegt.

5. Reifen (1) nach einem der vorhergehenden Ansprüche, **dadurch gekennzeichnet, dass** die elektromagnetische Send- und Empfangsvorrichtung (6) zwischen einer Reifeninnenschicht (17) des Reifens (1) und der Karkasslage (7) angeordnet ist.

## Claims

1. Tyre (1), wherein the tyre (1) is rotatable about an axis of rotation (2) in a rotational direction (3), having a bead region (4), wherein the bead region (4) has a bead core (5), and having an electromagnetic transmitting and receiving device (6) and having a carcass ply (7), wherein the carcass ply (7) has a carcass ply turn-up end (8), wherein a radial distance (9) of a first surface point (10) of the electromagnetic transmitting and receiving device (6) that is closest to the axis of rotation (2) in the radial direction (11) from the axis of rotation (2) is at least 3 mm greater than a radial distance (12) from the axis of rotation (2) of a surface point (13) of the bead core (5) that is furthest away from the axis of rotation (2) in the radial direction (11), and a radial distance (14) of a second surface point (15) of the electromagnetic transmitting and receiving device (6) that is furthest away from the axis of rotation (2) in the radial direction (11) from the axis of rotation (2) is at most 10 mm greater than a radial distance (16) of the carcass ply turn-up end (8) from the axis of rotation (2), wherein the electromagnetic transmitting and receiving device (6) has a rubber covering, wherein the rubber covering is a component part of the electromagnetic transmitting and receiving device (6), wherein the rubber covering has a modulus of elasticity which is less than or equal to a modulus of elasticity of an adjacent rubber compound, wherein the rubber compound is a rubber compound of the tyre (1) adjacent to the rubber covering, wherein the rubber covering is in particular of a cuboidal or ellipsoidal form, **characterized in that** a maximum thickness of the electromagnetic transmitting and receiving device (6) of at most 3 mm, a maximum length, extending at right angles thereto, of the electromagnetic transmitting and receiving device (6) of at most 80 mm and a maximum width, extending at right angles to the thickness and length, of the electromagnetic transmitting and receiving device (6) of at most 20 mm are not exceeded.

2. Tyre (1) according to the preceding claim, **characterized in that** the radial distance (9) of the first surface point (10) of the electromagnetic transmitting and receiving device (6) that is closest to the axis of rotation (2) in the radial direction (11) from the axis of rotation (2) is at least 5 mm greater than the radial distance (12) from the axis of rotation (2) of the surface point (13) of the bead core (5) that is furthest away from the axis of rotation (2) in the radial direction (11).

3. Tyre (1) according to the preceding claim, **characterized in that** the radial distance (9) of the first surface point (10) of the electromagnetic transmitting and receiving device (6) that is closest to the axis of rotation (2) in the radial direction (11) from the axis of rotation (2) is 5 mm greater than the radial distance (12) from the axis of rotation (2) of the surface point (13) of the bead core (5) that is furthest away from the axis of rotation (2) in the radial direction (11).

4. Tyre (1) according to one of the preceding claims, **characterized in that** the carcass ply turn-up end (8) is a carcass-ply turn-up end point (8), wherein the carcass-ply turn-up end point (8) is the surface point of the carcass ply turn-up end (8) that is furthest away from the axis of rotation (2) in the radial direction (11).

5. Tyre (1) according to one of the preceding claims, **characterized in that** the electromagnetic transmitting and receiving device (6) is arranged between a tyre inner layer (17) of the tyre (1) and the carcass ply (7).

## Revendications

1. Pneu (1), le pneu (1) pouvant tourner autour d'un axe de rotation (2) dans un sens de rotation (3), qui possède une zone de talon (4), la zone de talon (4) possédant une tringle de talon (5), et qui possède un dispositif d'émission et de réception électromagnétique (6) et qui possède une nappe de carcasse (7), la nappe de carcasse (7) possédant une extrémité de rabattement de nappe de carcasse (8), un écart radial (9) entre un premier point de surface (10) du dispositif d'émission et de réception électromagnétique (6), qui est le plus proche de l'axe de rotation (2) dans la direction radiale (11), et l'axe de rotation (2) étant supérieur d'au moins 3 mm à un écart radial (12) par rapport à l'axe de rotation (2) d'un point de surface (13) de la tringle de talon (5), qui est le plus éloigné de l'axe de rotation (2) dans la direction radiale (11), et un écart radial (14) entre un deuxième point de surface (15) du dispositif d'émission et de réception électromagnétique (6), qui est le plus éloigné de l'axe de rotation (2) dans la direction radiale (11), et l'axe de rotation (2) étant supérieur d'au plus 10 mm à un écart radial (16) entre l'extrémité de rabattement de nappe de carcasse (8) et l'axe de rotation (2), le dispositif d'émission et de réception électromagnétique (6) possédant une enveloppe en caoutchouc, l'enveloppe en caoutchouc étant un élément constitutif du dispositif d'émission et de réception électromagnétique (6), l'enveloppe en caoutchouc présentant un module d'élasticité qui est inférieur ou égal à un module d'élasticité d'un mélange de caoutchouc adjacent, le mélange de caoutchouc étant un mélange de caoutchouc du pneu (1) qui est adjacent à l'enveloppe en caoutchouc, l'enveloppe en caoutchouc étant notamment de forme parallélépipédique ou ellipsoïdale, **caractérisé en ce qu'**une épaisseur maximale d'au plus 3 mm du dispositif d'émission et de réception électromagnétique (6), une longueur maximale, qui s'étend perpendiculairement à celle-ci, d'au plus 80 mm du dispositif d'émission et de réception électromagnétique (6) et une largeur maximale, qui s'étend perpendiculairement à l'épaisseur et à la longueur, d'au plus 20 mm du dispositif d'émission et de réception électromagnétique (6) ne sont pas dépassées.

2. Pneu (1) selon la revendication précédente, **caractérisé en ce que** la distance radiale (9) entre le premier point de surface (10) du dispositif d'émission et de réception électromagnétique (6), qui est le plus proche de l'axe de rotation (2) dans la direction radiale (11), et l'axe de rotation (2) est supérieure d'au moins 5 mm à la distance radiale (12) par rapport à l'axe de rotation (2) du point de surface (13) de la tringle de talon (5) qui est le plus éloigné de l'axe de rotation (2) dans la direction radiale (11).

3. Pneu (1) selon la revendication précédente, **caractérisé en ce que** la distance radiale (9) entre le premier point de surface (10) du dispositif d'émission et de réception électromagnétique (6), qui est le plus proche de l'axe de rotation (2) dans la direction radiale (11), et l'axe de rotation (2) est supérieure d'au moins 5 mm à la distance radiale (12) par rapport à l'axe de rotation (2) du point de surface (13) de la tringle de talon (5) qui est le plus éloigné de l'axe de rotation (2) dans la direction radiale (11).

4. Pneu (1) selon l'une des revendications précédentes, **caractérisé en ce que** l'extrémité de rabattement de nappe de carcasse (8) est un point d'extrémité de rabattement de nappe de carcasse (8), le point d'extrémité de rabattement de nappe de carcasse (8) étant le point de surface de l'extrémité de rabattement de nappe de carcasse (8) qui est le plus éloigné de l'axe de rotation (2) dans la direction radiale (11).

5. Pneu (1) selon l'une des revendications précédentes, **caractérisé en ce que** le dispositif d'émission et de réception électromagnétique (6) est disposé entre une couche interne de pneu (17) du pneu (1) et la nappe de carcasse (7).
